(19) Europäisches Patentamt
European Patent Office
Office européen des brevets

(11) Publication number : **0 581 576 A1**

(12) # EUROPEAN PATENT APPLICATION

(21) Application number : **93305938.8**

(51) Int. Cl.$^5$ : **C08F 8/42**

(22) Date of filing : **27.07.93**

(30) Priority : **30.07.92 US 921782**

(43) Date of publication of application :
**02.02.94 Bulletin 94/05**

(84) Designated Contracting States :
**DE FR GB IT**

(71) Applicant : **DOW CORNING CORPORATION**
**3901 S. Saginaw Road**
**Midland Michigan 48686-0994 (US)**

(72) Inventor : **Baney, Ronald Howard**
**2-23-10 Seijo Setagaya-ku**
**Tokyo 157 (JP)**
Inventor : **Graiver, Daniel**
**4514 Ottawa Street**
**Midland, Michigan (US)**
Inventor : **Lomas, Arnold Wade**
**4156 Levely**
**Rhodes, Michigan (US)**

(74) Representative : **Kyle, Diana et al**
**Elkington and Fife Prospect House 8**
**Pembroke Road**
**Sevenoaks, Kent TN13 1XR (GB)**

(54) **Reaction products of organic polymers with inorganic alkoxides or halosilanes.**

(57) The optically clear composites of the present invention are prepared by reacting an organic polymer containing a plurality of pendant hydroxyl groups with a specified class of metal alkoxides or with a silane containing at least one silicon-bonded alkoxy group or halogen atom. To avoid substantial hydrolysis and homocondensation of the metal alkoxide, akoxysilane or halosilane, the reaction is conducted under substantially anhydrous conditions or in the presence of a small, carefully controlled amount of water, depending upon the properties desired in the final polymer. The reaction mixture also includes a catalyst for the trans-alcoholysis reaction when the hydrolyzable group is alkoxide or a suitable acid acceptor when the inorganic reactant is a halosilane.

EP 0 581 576 A1

This invention relates to modified organic polymers which are reaction products of organic polymers containing pendant hydroxyl groups with at least one alkoxysilane, halosilane or an alkoxide of a specified group of metals wherein substantially no hydrolysis and self-condensation of the silane or alkoxide have occured.

In those instances where the prior art reports physical mixtures or reaction products of an alkyl orthosilicate with a hydroxyl-substituted organic polymer, the silicate is at least partially hydrolyzed and subsequently condensed or the polymer is previously modified by reaction with an organosilicon compound.

An objective of the present invention is to provide reaction products of a hydroxyl-substituted organic polymer and a metal alkoxide, a silicate or a halosilane that are homogeneous and preferably optically clear. Films formed from these reaction products exhibit high levels of physical properties such as tensile, hardness and tensile strength.

The present invention is prepared by reacting an organic polymer containing a plurality of pendant hydroxyl groups with a specified class of metal alkoxides or with a silane containing at least one silicon-bonded alkoxy group or halogen atom. To avoid substantial hydrolysis and homocondensation of the metal alkoxide, alkoxysilane or halosilane, the reaction is conducted under substantially anhydrous conditions or in the presence of a small, carefully controlled amount of water, depending upon the properties desired in the final composite. The reaction mixture also includes a catalyst for the trans-alcoholysis reaction when the hydrolyzable group is alkoxide or a suitable acid acceptor when the inorganic reactant is a halosilane.

The present invention provides a modified organic polymer wherein at least a portion of the repeating units of said polymer contain either (a) a pendant monovalent substituent bonded to a carbon atom of said polymer and selected from

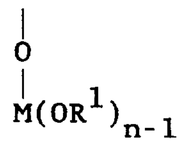 and 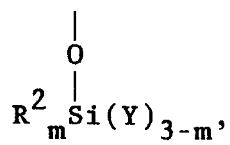,

or (b) a divalent linking substituent joining two of said repeating units, where the formula of said linking substituent is selected from

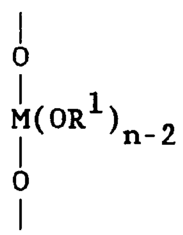 and 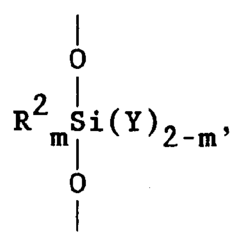,

where $R^1$ and $R^2$ are identical or different alkyl radicals, M is selected from aluminum, boron, titanium and zirconium, Y is chlorine, bromine, iodine or $OR^1$, m is 0, 1 or 2 and n represents the valence of M.

The modified polymers of this invention are prepared by reacting an alkoxide of aluminum, boron, titanium and zirconium or a silane containing at least one alkoxide group or halogen atom per molecule, with an organic polymer containing a plurality of pendant hydroxyl groups. Depending upon the properties desired in the final polymer, the reaction is conducted either under substantially anhydrous conditions or in the presence of a small, carefully controlled amount of water and the reaction mixture also contains either an effective amount of catalyst for trans-alcoholysis reactions when the other reactant is an alkoxide or an acid acceptor when the reactant is a silane containing chlorine, bromine or iodine atoms.

A reaction conducted in accordance with the present method results in the formation of covalent oxygen bonds between the metal of the alkoxide or the silicon atom of the halosilane and at least a portion of the carbon atoms that were bonded to hydroxyl groups in the initial organic polymer. When the reactant is an alkoxide, an alcohol corresponding to the alkoxy groups present in the alkoxide is generated as a by-product of the reaction. If a halosilane is used, the by-product is a hydrogen halide that is typically neutralized by an acid acceptor present in the reaction mixture. Suitable acid acceptors include but are not limited to organic amines, hydroxides of alkali metals or alkaline earth metals and metal oxides, such as calcium and zinc oxides.

The characterizing feature of the present modified polymers is the absence of substantial hydrolysis and condensation of the metal alkoxide, alkoxysilane or halosilane that is reacted with the hydroxyl-containing organic polymer. This is achieved by conducting the reaction under anhydrous conditions or only controlled

amounts of water, depending upon the properties desired in the final composite.

The amount of water present is insufficient to cause any appreciable hydrolysis and homocondensation of the alkoxide or halosilane to the corresponding oxide, which is characterized by -M-O-M- or -Si-O-Si- units.

Using the reaction product of ethyl orthosilicate and polyvinyl alcohol as an example of a modified polymer of the present invention, the reaction product is a polymer wherein at least a portion of the initial $-CH_2CH(OH)-$ units of the polyvinyl alcohol have been converted to $-CH_2CH[OSi(OEt)_3]-$ units, where Et represents the ethyl radical. Ethanol is generated as a by-product of this reaction.

Depending upon reaction conditions and the relative amounts of the two reactants, a second alkoxy group of the initial alkoxide or a second halogen atom of the halosilane can react with a second repeating unit of the same polymer or a different polymer chain to produce a crosslinked material containing units of the formula

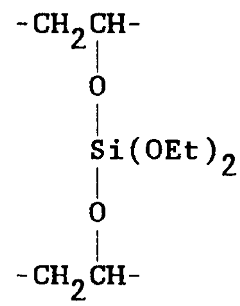

The reaction between the organic polymer and the alkoxide or halosilane reaches a point at which gellation occurs, indicating formation of the present modified polymer. The alcohol interchange reaction is allowed to continue until it reaches the degree of completion that will achieve the desired physical properties.

The amount of water present in the reaction mixture together with the extent of the alcohol interchange reaction are critical to determining the physical properties of the final modified polymer. The present inventors found that as the amount of-water present in the reaction increases, composites containing the same concentration of reacted alkoxide or halosilane typically become softer and less brittle and the reaction time required to achieve a given extent of alcohol interchange increases. Above a certain water concentration the reaction mixture will not gel. This is believed due to predominance of the hydrolysis reaction resulting in homocondensation of the alkoxide or halosilane reactant.

Depending upon the desired properties of the final composite, the concentration of water is typically from 0 to about 3 moles per liter of reaction mixture. Using hydrochloric acid as the catalyst for the trans-alcoholysis reaction this range is preferably from 0.1 mmol to 2.3 moles of water per liter.

It is believed that the absence of a significant increase in the molecular weight or concentration of the condensed hydrolysis products derived from the alkoxide, alkoxysilane or halosilane is responsible for the optical clarity and superior physical properties of the present modified polymers.

One class of alkoxides that are reacted with a hydroxyl-containing organic polymer to obtain the organic/inorganic composites of this invention can be represented by the formula $M(OR^1)_n$ where M is aluminum, boron, titanium or zirconium, $R^1$ represents an alkyl radical containing from 1 to 10 carbon atoms and $\underline{n}$ represents the valence of M. The value of $\underline{n}$ is 3 for aluminum and boron and the value is 4 for titanium and zirconium.

A second class of alkoxides includes alkyl orthosilicates, represented by the formula $Si(OR^1)_4$ and organotrialkoxysilanes represented by the formula $R^2Si(OR^1)_3$, where $R^2$ represents an alkyl radical containing from 1 to 4 carbon atoms.

In the formulae for the present alkoxides $R^1$ preferably contains from 1 to 4 carbon atoms and is most preferably methyl, ethyl or n-propyl. These preferences are based on the relatively low boiling points of the corresponding alcohols that are formed as by-products of the trans-alcoholysis reaction between the alkoxide and the hydroxyl-containing organic polymer. The low boiling point of the alcohol facilitates its removal during this reaction.

The alkoxy groups of the alkoxysilane can also be replaced with chlorine, bromine or iodine. It will be understood that the replacement of alkoxide groups by a halogen atom will change the type of by-product generated when the silane is reacted with the hydroxyl-substituted organic polymer. For example, when the alkoxide groups are replaced by chlorine, the by-product is hydrogen chloride. The by-product hydrogen halides are neutralized by an acid acceptor that is present in the reaction mixture. An advantage of using halosilanes is that the hydrogen halide generated as a by-product functions as a catalyst for the reaction of the silane with the hydroxyl-containing polymer to form the present modified polymers.

Suitable hydroxyl-containing organic polymers contain a major portion, preferably at least 50 percent, of

repeating units with pendant hydroxyl groups bonded to aliphatic or cycloaliphatic carbon atoms. Examples of such polymers include but are not limited to partially and fully hydrolyzed polyvinyl esters, available as polyvinyl alcohol and hydroxyl-functional polysaccharides. The molecular weight of the polymers determine the viscosity of solutions of the polymer, which in turn influences the selection of reaction conditions, particularly temperature and polymer concentration, used to prepare the present composites. The molecular weight of the polymer will also affect the physical properties of the final product.

The number average molecular weight ($M_n$) of the polyvinyl alcohols is preferably from 2200 to the maximum molecular weight available in a linear polymer. The only requirement is that the polymer will dissolve in the non-aqueous solvent selected to dissolve the metal alkoxide or alkoxysilane. This preference is based on achieving the optimum combination of physical properties in the final composite.

The function of the trans-alcoholysis catalyst is to initiate and/or accelerate the trans-alcoholysis or alcohol interchange reaction of the alkoxide reactant and the polymer and to control the rate of this reaction. To maximize its efficacy the catalyst is preferably soluble in the reaction medium containing the solubilized organic polymer and metal or silicon alkoxide. Suitable catalysts are Lewis acids and bases, including but not limited to amines, metal oxides, organic and inorganic acids and salts thereof, alcoholates and phenolates derived from alkali and alkaline earth metals, metal halides and organotin compounds.

Mineral acids such as hydrochloric acid are preferred catalysts, based on their cost, solubility in and compatibility with the reactants used to prepare the present composites. The acids are preferably added to the reaction mixture as a concentrated aqueous solutions to minimize the amount of water present.

When the catalyst is an aqueous solution of a base or an inorganic acid such as hydrochloric acid, the present inventors discovered that the rate of the trans-alcoholysis reaction appears to be a function of the pH of the reaction mixture. It is therefore convenient to express the concentration of this type of catalyst in moles or millimoles per liter of reaction mixture. From 0.1 to 4 millimoles of hydrogen chloride per liter of reaction mixture is preferred for the production of useful modified polymers. The brittleness of the gel may increase beyond useful limits at hydrochloric acid concentrations above about 4 millimoles per liter.

The polyvinyl alcohol and the solvents used to prepare the present composites typically contain trace amounts of acid. Using a metal alkoxide as the reactant with a hydroxyl-containing organic polymer, if the bond between the alkoxide group and the metal atom is sufficiently polar in nature, as in the case of a zirconium alkoxide, these trace amounts of acid may be sufficient to initiate a rapid alcohol exchange reaction between the alkoxide and the hydroxyl-containing organic polymer in the absence of any additional catalyst.

The organic polymer/inorganic alkoxide composites of this invention are prepared by dissolving the hydroxyl-containing polymer and alkoxide compound in a suitable organic solvent containing either no additional water or a controlled amount of water in addition to a catalyst for the alcohol reaction.

Suitable solvents are polar, water-miscible organic liquids. Suitable solvents for polyvinyl alcohol include but are not limited to dimethyl sulfoxide and N,N-dimethylacetamide. The polymer is insoluble in alcohols such as methanol and ethanol. When a halosilane is used as the reactant with the hydroxyl-containing polymer it is usually advisable to avoid solvents such as dimethyl sulfoxide that react with active halogen atoms because these reactions can be highly exothermic.

The concentration of hydroxyl-containing organic polymer in the reaction mixture is a function of the molecular weight of the polymer, the solvent selected and the temperature at which the trans-alcoholysis reaction will be conducted. Using dimethyl sulfoxide as the solvent the concentration range for preferred polyvinyl alcohols is typically from 1 to 20 weight percent.

The molar ratio of hydroxyl groups in the organic polymer to alkoxide groups or halogen atoms present on the compound that is reacted with the polymer will determine the properties of the final modified polymer, particularly its hardness, brittleness, tensile strength and water sensitivity. This range is typically from 1.0 up to 4. Below a ratio of 1.0 the excess alkoxide or halosilane present can condense with itself, resulting in the formation of an incompatible phase and a reduction in the clarity and physical properties of the final modified polymer. The preferred range will depend upon the particular organic polymer and alkoxide or halosilane selected. For polyvinyl alcohol and ethyl orthosilicate the range is from 1.0 to 1.1 moles of hydroxyl groups per mole of alkoxide groups or halogen atoms if the reactant is a halosilane.

Using polyvinyl alcohol and an organotrialkoxysilane such as methyltrimethoxysilane the preferred molar ratio of hydroxyl to alkoxy groups will be determined by the properties desired in the final composite.

In accordance with a preferred embodiment of the present method the hydroxyl-containing polymer is dissolved in a suitable solvent that will also dissolve but not react with the alkoxy compound or halosilane and the catalyst or acid acceptor. When the polymer is polyvinyl alcohol complete solubilization of the polymer usually requires that the solvent be heated to a temperature above about 90°C. This step as well as the subsequent reaction with the alkoxide or halosilane is preferably conducted under an inert atmosphere such as nitrogen to exclude atmospheric moisture.

The solution of hydroxyl-containing polymer is combined with the required amount of alkoxide or halosilane, catalyst or acid acceptor and water. The rate of the alcohol exchange reaction and correspondingly the rate of composite formation resulting from this reaction, can be accelerated by heating the reaction mixture to a temperature that does not exceed the boiling point of the alkoxide or halosilane reactant.

Formation of the present composites is indicated by gelation of the reaction mixture. The time required for gelation to occur, and whether or not it will occur, is determined by a number of variables, including the concentrations of reactants, water and catalyst and the temperature of the reaction mixture. It has been found that the time required to initiate gelation at a given temperature is directly proportional to the water concentration. Using the preferred polyvinyl alcohol and methyltrimethoxysilane gelation was observed within a few minutes with no added water while no gelation occurred even after 44 hours of heating using 4.6 moles of water per liter of reaction mixture.

Because the reaction mixture forms a gel-like substantially non-flowable material the reaction between the hydroxyl-containing polymer and the metal alkoxide and silane is conducted in a mold or other container corresponding to the shape of the final desired article, i.e. a sheet, slab, tube, etc.

Using hydrochloric acid as the trans-alcoholysis catalyst, the relationship between gelation time and catalyst concentration appears more complex, in that the rate of gelation, which is related to the rate of reaction of the alkoxide with the hydroxyl-containing polymer, is relatively rapid at catalyst concentrations below about 0.1 millimole (mmol) per liter and decreases with increasing catalyst concentration up to a concentration of about 4 mmol/liter, at which point the reaction becomes so rapid that the reaction mixture gels when the polymer, alkoxide and catalyst are combined under ambient conditions.

Two of the factors that appear to most influence the physical properties of the composite are the percentage of hydroxyl groups present on the initial polymer that react with the alkoxide or halosilane and the extent to which homocondensation of the alkoxide or halosilane reactant occurs.

The present composites are isolated by extracting from the gelled reaction mixture at least a portion of the solvent used to dissolve the initial hydroxyl-containing organic polymer together with the alcohol or halogen compound formed as a by-product of the reaction.

The extraction step is preferably performed by immersing the gelled modified polymer in a volatile organic liquid that will not react with the modified polymer and is miscible with the solvent used to dissolve the hydroxyl-containing organic polymer. Preferred liquids include but are not limited to ketones such as acetone and cyclic ethers such as tetrahydrofuran.

The final modified polymer is obtained by removing the volatile extraction solvent from the gel. This can be achieved by allowing the solvent to evaporate under ambient conditions. Heating the gel and/or placing it under reduced pressure will accelerate the evaporation process. End uses for the present modified polymers include but are not limited to optical devices, protective coatings and biocompatible materials.

The following examples describe preferred embodiments of the present composites and methods for preparing these materials and should not be interpreted as limiting the scope of the invention described in the accompanying claims. Unless otherwise specified all parts and percentages are by weight and viscosities values were measured at 25°C.

## EXAMPLE 1

Solutions containing 2, 4 and 8 weight percent of polyvinyl alcohol (PVA) were prepared by heating a mixture containing the required amount of a commercially available grade of PVA that was more than 99.5% hydrolyzed and had a number average molecular weight of 86,000 and dimethyl sulfoxide at a temperature of 100 degrees with moderate stirring under a nitrogen atmosphere until all of the polymer dissolved. The solutions containing 2, 4 and 8 percent PVA will be referred to as I, II and III, respectively. These solutions were allowed to cool to 45°C., at which time an amount of ethyl orthosilicate (EOS) equivalent to 4 weight percent, based on the weight of the solution, was added and stirring was continued until a clear solution was obtained. A mixture of solution III and 8 weight percent EOS was also prepared.

Each of these solutions was divided into aliquot portions. A quantity of 1N aqueous solution of hydrochloric acid solution equivalent to 3 mmol of HCl per liter of solution was added to some of the aliquots. The water content of the samples containing the HCl solution was equivalent to 0.2 mole per liter. Each of the catalyzed solutions were then poured into individual rectangular molds to a depth of 0.5 cm. and the molds were placed in an oven maintained at a temperature of 75°C. for 16 hours. Samples for determination of physical properties and dissolution temperature were cut from the resultant sheets.

Samples for the dissolution test measured 2 inches (5 cm.) in length and 0.5 inch (1.3 cm.) in width.

Tensile strength and elongation were determined at 21°C. and 40% relative humidity using a crosshead speed of 10 inches (25.4 cm.) per minute.

The following samples were used for the dissolution test:

A = Prepared using solution III and 4 weight percent EOS containing the HCl catalyst (2.36 moles of -OH groups from the PVA per mole of ethoxy groups from the EOS), final sample thickness = 0.004 inch (0.1 mm).

B = Prepared using solution III, 8 weight percent EOS (1.18 moles of hydroxyl groups per mole of ethoxy groups) and no catalyst; final sample thickness = 0.0055 inch (0.14 mm).

The samples were attached to a support and placed in water heated at 60°C. for 10 minutes with stirring. Both samples retained their original appearance. The temperature of the water was then gradually increased to 90°C. over a period of 22 minutes and the samples were observed periodically. The results of these observations are recorded in Table 1.

Table 1

| Temperature (°C) | Condition of Samples |
|---|---|
| 70 | Both samples retained initial shape, slight odor of dimethylsulfoxide |
| 74 | Sample A - No change in shape, still attached to holder; Sample B - melted off the holder and swirling in the water. |
| 79 | Sample A - No change; Sample B - melted. |
| 85 | Sample A - No change in shape, still attached to the holder, but moving more rapidly in the water. |
| 90 | Sample A - No change. |

The following samples were prepared as described in the preceding section of this example and used for the determination of tensile strength and elongation:

C - Polyvinyl alcohol (PVA) with no ethyl orthosilicate (EOS) and no hydrochloric acid,

D - Polyvinyl alcohol with no ethyl orthosilicate, contained same HCl concentration as sample E,

E - Sample III with 4 weight percent EOS (mole ratio -OH:-$OC_2H_5$ = 2.36) and HCl,

F - Solution II with HCl,

G - Sample I (mole ratio -OH:-$OC_2H_5$ = 0.6) with HCl,

H - Sample I without HCl.

The tensile strength and elongation values for the samples are recorded in Table 2.

Table 2

| Sample | -OH/-$OC_2H_5$ (moles) | Tensile Strength (MPa) | % Elongation |
|---|---|---|---|
| C* | No EOS | 55.8 | 135 |
| D | No EOS | 48.8 | 226 |
| E | 2.36 | 78.6 | 101 |
| F | 1.18 | 66.5 | 258 |
| G | 0.6 | 3.31 | 57 |
| H* | 0.6 | 62.1 | 394 |

* = no hydrochloric acid present

The trace amount of acid present in the reaction mixture used to prepare sample H was sufficient to promote formation of a modified polymer of the present invention.

Example 2

This example demonstrates the effect on the physical and optical properties of the present modified polymers of varying the molar ratio of reactive groups and the catalyst concentration. Table 2 summarizes the concentration of reactants, molar ratio of reactive groups and the properties of the final modified polymer. The samples were prepared as described in Example 1.

Table 3

| PVA (Wt. %) | TEOS (Wt. %) | -OH/ -$OC_2H_5$ Molar Ratio | 1N HCl mmol/L | Comment |
|---|---|---|---|---|
| 2 | 32 | 0.062 | 0.09 | Very Brittle |
| 5 | 40 | 0.125 | None | Clear Sheet, Little TEOS present |
| 5 | 40 | 0.125 | 0.09 | Hazy White Sheet |
| 2 | 8 | 0.25 | 0.09 | Hazy White Sheet |
| 4 | 8 | 0.5 | 0.045 | Hazy White Sheet |
| 8 | 8 | 1.0 | 0.22 | Clear, Flexible |

Example 3

This example demonstrates the effect on the properties of the composite of varying the amount of water present during the preparation of polyvinyl alcohol/methyltrimethoxysilane composites.

A solution of polyvinyl alcohol in dimethyl sulfoxide was prepared as described in Example 1 of this specification using 36 parts of polyvinyl alcohol and 414 parts of dimethyl sulfoxide and heating the resultant mixture for one hour at 110°C. under a nitrogen atmosphere. The resultant solution was allowed to cool to 25°C. under a stream of nitrogen. 119 Parts of methyltrimethoxysilane, equivalent to a molar ratio of hydroxyl groups to silane of 1:1, was then added dropwise. Stirring and addition of nitrogen were continued throughout the addition and until the reaction mixture cleared, which required from 5 to 10 minutes.

0.046 parts of 10 N aqueous hydrochloric acid was then added, which is equivalent to 0.8 mmol per liter of reaction mixture followed by stirring.

A 120 gram aliquot of the resultant solution was combined with 0, 1, 5 or 10 grams of deionized water, equivalent to a concentration of 0, 0.463, 2.315 and 4.63 moles per liter. The resultant mixture was then distributed among 10 molds filled to a depth of 0.5 cm. The molds were then sealed and placed in an oven maintained at a temperature of 80°C. The time required for gelation of the mixture to occur was recorded and one sample was removed at that time. Additional samples were removed from the oven at hourly intervals.

The samples were allowed to cool to ambient temperature, at which time they were soaked in acetone for 24 hours. The acetone from this initial extraction was removed and fresh acetone added to cover the sample. The acetone from the initial extraction was retained and analyzed to determine the concentration of unreacted methyltrimethoxysilane (MTM) that had been extracted from the samples. The analysis was conducted using gas liquid chromatography and the results are recorded in Table 4.

The sample were extracted for a total time of 72 hours. Samples for tensile property measurements were cut from the resultant sheet and dried while covered with a flat 500 gram weight to prevent warping.

The tensile strength, elongation and toughness of the samples were determined and the results are recorded in Table 4.

Table 4

| Water Conc. (moles/liter) | 80°C. Cure (hours) | MTM Reacted (wt. %) | Tensile(MPa) | Elongation (%) at break | Toughness (MPa) |
|---|---|---|---|---|---|
| 0 | 0.5 | 32 | 36.1 | 235 | 67.1 |
| 0 | 1.5 | 42 | 42.2 | 103 | 27.6 |
| 0 | 2.5 | 49 | 28.3 | 64 | 11.9 |
| 0 | 3.5 | 57 | 26.4 | 58 | 7.3 |
| 0 | 20 | 79 | ** | | |
| 0 | 44 | 92 | ** | | |
| 0.463 | 0.75 | 33 | 28.7 | 140 | 36.2 |
| 0.463 | 1.75 | 47 | 46.7 | 135 | 44.9 |
| 0.463 | 2.75 | 56 | 45.8 | 100 | 30.4 |
| 0.463 | 3.75 | 69 | 33.9 | 75 | 16.5 |
| 0.463 | 20 | 90 | 18.6 | 16 | 2.6 |
| 0.463 | 44 | 93 | ** | | |
| 2.315 | 2 | 68 | 35.5 | 183 | 26.7 |
| 2.315 | 3 | 76 | 35.1 | 112 | 33.9 |
| 2.315 | 4 | 84 | 52.6 | 133 | 57.5 |
| 2.315 | 5 | 87 | 35.2 | 130 | 39.4 |
| 2.315 | 20 | 99 | 12.6 | 4 | 0.25 |
| 2.315 | 44 | 100 | ** | | |
| 4.63 | 0.5-44 | Samples did not cure | | | |

** = Sample was brittle and shattered during the measuring process.

The brittleness of some samples containing the higher concentrations of methyltrimethoxysilane is believed due to homocondensation of the silane.

Example 4

This example demonstrates the effect of the concentration of hydrochloric acid as a catalyst on the properties of modified polyvinyl alcohol prepared in accordance with the present invention.

Samples of the present composites were prepared as described in Example 3, with the exception that 1 gram of deionized water, equivalent to 463 mmol/L and the weight percent of HCl specified in Table 4 were added to each 120 gram aliquot. The HCl was added as 0.77, 1, 2 or 4 grams of a solution prepared by blending 0.15 part of 10N aqueous HCl with 12 parts of dimethyl sulfoxide, which is equivalent to 0.8, 1.04, 2.08 and 4.16 mmol of HCl per liter of reaction mixture.

The properties of the modified polymers are summarized in Table 5.

Table 5

| HCl Conc. (mmol/L) | 80°C. Cure (hours) | MTM Reacted (wt. %) | Tensile, MPa | % Elongation at break | Toughness (MPa) |
|---|---|---|---|---|---|
| 0.8 | 0.75 | 32 | 28.7 | 140 | 36.2 |
| 0.8 | 1.75 | 42 | 46.7 | 135 | 44.9 |
| 0.8 | 2.75 | 49 | 45.8 | 100 | 30.4 |
| 0.8 | 3.75 | 57 | 33.9 | 75 | 22.7 |
| 0.8 | 21 | 79 | 18.63 | 19 | 2.6 |
| 0.8 | 44 | 92 | * | | |
| 1.04 | 1.0 | 32 | 46.5 | 167 | 64.2 |
| 1.04 | 2.0 | 46 | 57.3 | 107 | 40.0 |
| 1.04 | 3.0 | 54 | 60.0 | 88 | 32.8 |
| 1.04 | 4.0 | 59 | 27.2 | 57 | 9.7 |
| 1.04 | 44 | 93 | * | | |
| 2.08 | 3 | 43 | 50.6 | 173 | 64.8 |
| 2.08 | 4 | 47 | 51.6 | 139 | 49.5 |
| 2.08 | 44 | 89 | 38.3 | 72 | 22.5 |
| 4.04 | 0.5-3 | All samples were too brittle to be removed from mold | | | |

* = Sample too brittle for preparation of test bar, which is attributed to excessive crosslinking by the methyltrimethoxysilane.

## Example 5

This example demonstrates the modification of polyvinyl alcohol by reaction with aluminum and zirconium alkoxides.

4 grams of a 14 weight percent solution of aluminum isopropoxide in tetrahydrofuran was added to 50 grams

of a 4 weight percent solution of polyvinyl alcohol in dimethyl sulfoxide and blended to homogeneity. The molar ratio of PVA to aluminum alkoxide was 5.6:1. One half of this solution was placed in a mold of the type described in Example 1, which was then sealed and placed in an oven maintained at 75°C. One drop of a 10 N aqueous hydrochloric solution (equivalent to about 2 mmol of HCl per liter) was added to the remaining portion, which was then poured into a mold and placed in the oven together with the sample that did not contain the acid. Both samples gelled in 10 minutes. The samples were removed from the oven after 15 minutes allowed to cool to ambient temperature and extracted with acetone to yield a composite of the present invention. The acetone from both samples was found to contain propanol, indicating that the trans-alcoholysis reaction occurred in the absence of additional water or catalyst other than that present as impurities in the initial reactants and solvents.

Four parts of a solution containing 4 weight percent of zirconium n-propoxide in tetrahydrofuran was added to 50 parts of a 4 weight percent solution of PVA in dimethyl sulfoxide. This solution gelled immediately.

As a control, a 4 weight percent solution of PVA in dimethylsulfoxide was placed in a sealed mold and heated for 4 days at 70°C. No gellation of the mixture was observed during this time period. The same result was observed when a 4 weight percent PVA solution in dimethyl sulfoxide that contained 7.5 weight percent tetrahydrofuran was heated at 70°C. for 4 days or remained under ambient conditions for the same period of time.

## Claims

1. A modified organic polymer wherein at least a portion of the repeating units of said polymer contain either
   (a) a pendant monovalent substituent bonded to a carbon atom of said polymer and selected from

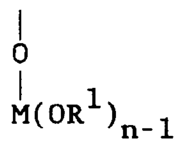

and

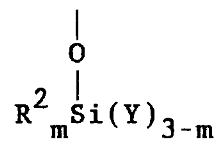

   where $R^1$ and $R^2$ represent identical or different alkyl radicals, M is selected from aluminum, boron, titanium and zirconium, Y is chlorine, bromine or $OR^1$, m is 0, 1 or 2 and n represents the valence of M, or
   (b) a divalent linking substituent joining two of said repeating units, where the formula of said linking substituent is selected from

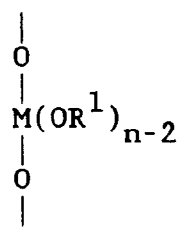

and

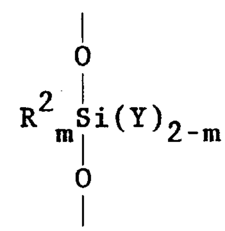

   where $R^1$ and $R^2$ represent identical or different alkyl radicals, M is selected from aluminum, boron, titanium and zirconium, Y is chlorine, bromine or $OR^1$, m is 0 or 1 and n represents the valence of M.

2. A modified organic polymer according to claim 1 where M is aluminum or zirconium, Y is $OR^1$, $R^1$ and $R^2$ are individually selected from methyl, ethyl and n-propyl and the organic polymer is selected from partially or fully hydrolyzed polyvinyl alcohol and hydroxyl-functional polysaccharides.

3. A modified organic polymer according to claim 2 where $R^1$ is methyl or ethyl, $R^2$ is methyl, Y is methoxy or ethoxy, m is 0 or 1 and said organic polymer is a fully hydrolyzed polyvinyl alcohol exhibiting a number average molecular weight of at least 2200.

4. A method for preparing a modified organic polymer, said method comprising the following sequence of steps:
   1) preparing a reaction mixture by blending to homogeneity (a) a solution in a non-aqueous organic

liquid of an organic polymer containing a plurality of pendant hydroxyl groups, (b) an amount of a compound or a mixture of compounds selected from alkoxides represented by the formula M $(OR^1)_n$ and silanes corresponding to the formula $R^2{}_mSi(Y)_{4-m}$ equivalent to from 0.25 to 1 $OR^1$ or Y group per hydroxyl group in said organic polymer and (c) an effective amount of a trans-alcoholysis catalyst and (d) an optional quantity of water of 0 to 3 millimoles per liter of said reaction mixture, where $R^1$ and $R^2$ are identical or different alkyl radicals, M is selected from the group consisting of aluminum, boron, titanium and zirconium, Y is chlorine, bromine, iodine or $OR^1$, m is 0, 1, 2 or 3 and n is equal to the valence of M;

2) heating said reaction mixture for a time and at a temperature sufficient to cause gellation of said reaction mixture; and

3) isolating said modified organic polymer by removing at least a portion of said non-aqueous solvent.

**5.** A method according to claim 4 where M is aluminum or zirconium, Y is $OR^1$, $R^1$ and $R^2$ are individually selected from alkyl radicals containing from 1 to 4 carbon atoms, said organic polymer is selected from partially or fully hydrolyzed polyvinyl alcohol and hydroxyl-functional polysaccharides, said catalyst is selected from amines, organic acids, inorganic acids and organotin compounds and the initial reaction mixture contains from 1.0 to 4 moles of hydroxyl groups present in said polymer per mole of alkoxy groups present in said compound.

**6.** A method according to claim 5 where $R^1$ is methyl or ethyl, $R^2$ is methyl, Y is methoxy or ethoxy, said organic polymer is a fully hydrolyzed polyvinyl alcohol, said catalyst is hydrochloric acid and is present at a concentration of from 0.1 to 4 millimoles of hydrogen chloride per liter of said reaction mixture, the concentration of water is from 0.1 milimoles to 2.3 moles per liter of said reaction mixture and said organic liquid is removed by extracting said modified organic polymer with a volatile liquid that is miscible with said organic liquid.

**7.** A method according to claim 6 where said organic liquid is selected from dimethyl sulfoxide, tetrahydrofuran and N,N-dimethylacetamide.

European Patent Office

# EUROPEAN SEARCH REPORT

Application Number
EP 93 30 5938
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 959 242 (W. A. WATTS)<br>* column 1, line 29 - column 3, line 21; claims 1-14 * | 1-7 | C08F8/42 |
| X | EP-A-0 235 526 (VEB LEIPZIGER ARZNEIMITTELWERK)<br>* page 6, line 6 - line 16; claims 1-12 * | 1-6 | |
| X | GB-A-2 011 427 (SONY CORPORATION)<br>* page 3, line 29 - line 56 *<br>* page 4, line 11 - line 17; claims 1-20 * | 1-6 | |
| A | GB-A-2 205 318 (SHELL INTERNATIONALE RESEARCH MAATSCHAPPIJ B. V.)<br>* page 5, line 12 - line 21; claims 1-14 * | 1 | |
| A | EP-A-0 195 406 (MITSUBISHI PETROCHEMICAL CO., LTD.)<br>* claims 1-7 * | 1 | |
| A | US-A-3 491 075 (H. G. G. DEKKING)<br>* claims 1-7 * | 1 | TECHNICAL FIELDS SEARCHED (Int. Cl.5) |
| A | CHEMICAL ABSTRACTS, vol. 77, no. 4, 24 July 1972, Columbus, Ohio, US;<br>abstract no. 21246q,<br>MATSUI, SHIGEKAZU 'CROSSLINKING POLY(VINYL ALCOHOL) ELASTOMERS'<br>page 94 ;column 1 ;<br>* abstract *<br>& JP-A-71 028 652 (TOYO RUBBER INDUSTRY CO., LTD.)<br>20 August 1971 | 1 | C08F |
| A | US-A-3 488 337 (J. R. JONES)<br>* claims 1-3 * | 1 | |
| | -/-- | | |

The present search report has been drawn up for all claims

| Place of search | Date of completion of the search | Examiner |
|---|---|---|
| THE HAGUE | 05 OCTOBER 1993 | PERMENTIER W.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent Office

# EUROPEAN SEARCH REPORT

Application Number
EP 93 30 5938
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN vol. 14, no. 403 (C-753)(4346) 31 August 1990 & JP-A-21 50 462 ( NIPPON SODA CO LTD ) 8 June 1990 * abstract * --- | 1 | |
| P,X | CHEMICAL ABSTRACTS, vol. 117, no. 22, 30 November 1992, Columbus, Ohio, US; abstract no. 214593d, IGARASHI, TAKAHARU 'CROSSLINKING OF HYDROXY GROUP-CONTAINING POLYMERS' page 119 ; * abstract * | 1-6 | |
| P,X | & JP-A-4 209 606 (NIPPON SEIKI CO., LTD.) 31 July 1992 ----- | 1-6 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 05 OCTOBER 1993 | PERMENTIER W.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)